(19) Europäisches Patentamt / European Patent Office / Office européen des brevets

(11) **EP 2 541 213 B1**

(12) **FASCICULE DE BREVET EUROPEEN**

(45) Date de publication et mention de la délivrance du brevet:
**08.03.2017 Bulletin 2017/10**

(51) Int Cl.:
**G01D 3/032** *(2006.01)* **G01P 15/18** *(2013.01)*
**G01D 5/241** *(2006.01)* **G01L 1/14** *(2006.01)*
**G01L 9/02** *(2006.01)* **G01P 15/125** *(2006.01)*

(21) Numéro de dépôt: **11172424.1**

(22) Date de dépôt: **01.07.2011**

(54) **Procédé pour réduire la non linéarité pendant la mesure d'un paramètre physique et circuit électronique pour sa mise en oeuvre**

Verfahren zur Reduzierung der Nichtlinearität beim Messen eines physikalischen Parameters, und elektronischer Schaltkreis zu dessen Umsetzung

Method for reducing non-linearity during the measurement of a physical parameter and electronic circuit for implementing the same

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(43) Date de publication de la demande:
**02.01.2013 Bulletin 2013/01**

(73) Titulaire: **EM Microelectronic-Marin SA**
**2074 Marin (CH)**

(72) Inventeurs:
• **Grosjean, Sylvain**
**25500 Les Fins (FR)**
• **Deschildre, Alexandre**
**2074 Marin (CH)**

(74) Mandataire: **Ravenel, Thierry Gérard Louis et al**
**ICB**
**Ingénieurs Conseils en Brevets SA**
**Faubourg de l'Hôpital 3**
**2001 Neuchâtel (CH)**

(56) Documents cités:
**EP-A1- 1 835 263**    **WO-A1-2004/113930**
**WO-A1-2008/107737**    **US-A1- 2009 121 769**
**US-A1- 2011 154 906**

**Description**

L'invention concerne un procédé pour réduire l'effet de la non-linéarité notamment d'un convertisseur DAC dans une boucle d'asservissement pendant la mesure d'un paramètre physique au moyen d'un circuit électronique d'interface d'un capteur capacitif. Le paramètre physique peut concerner une accélération, une vitesse angulaire, une force ou une pression.

L'invention concerne également un circuit électronique d'interface d'un capteur capacitif pour la mise en oeuvre du procédé de réduction de l'effet de la non-linéarité du convertisseur DAC. Le capteur capacitif est composé d'au moins deux condensateurs montés en différentiel. Une électrode commune des condensateurs est susceptible de se déplacer entre deux électrodes fixes sous l'action par exemple d'une force pour modifier la valeur capacitive de chaque condensateur.

Dans une conception traditionnelle simple d'un tel capteur capacitif, l'électrode commune, qui est mobile, fait partie d'une armature maintenue élastiquement entre les deux électrodes fixes. Dans ce cas, le capteur capacitif peut être capable d'opérer une mesure notamment selon une direction de mouvement de l'électrode mobile. L'électrode mobile peut se déplacer d'une certaine distance en direction de l'une ou l'autre des électrodes fixes sous l'action notamment d'une force.

Avec un tel capteur à un seul axe de mesure, l'électrode commune se trouve au repos approximativement à égale distance de l'une et de l'autre électrode fixe, ce qui définit des valeurs capacitives égales des deux condensateurs. Par contre lorsque l'électrode commune se déplace sous l'action par exemple d'une force, la valeur capacitive de chaque condensateur varie inversement. Le circuit électronique d'interface relié au capteur capacitif permet ainsi de fournir un signal de sortie analogique. Ce signal de sortie analogique est défini sous la forme d'une tension dépendant de la variation des capacités des deux condensateurs.

Ce type de circuit électronique d'interface d'un capteur capacitif est décrit par exemple dans l'article rédigé par MM. H. Leuthold et F. Rudolph, qui est paru dans la revue intitulée "Sensors and actuators" A21-A23 (1990), pages 278 à 281.

Le capteur capacitif peut être un accéléromètre pour effectuer une mesure d'accélération en liaison avec un circuit électronique d'interface. Il peut s'agir d'un accéléromètre uniaxe comme le capteur capacitif susmentionné ou d'un accéléromètre multiaxe ou triaxial pour effectuer une mesure dans les trois directions X, Y et Z. Un tel accéléromètre triaxial du type MEMS peut comprendre une masse unique, c'est-à-dire une masse inertielle commune aux trois paires de condensateurs différentiels, ou trois masses pour les trois paires de condensateurs. Dans le premier cas, une seule électrode commune et six électrodes fixes sont prévues, alors que pour le second cas, une électrode commune avec deux électrodes fixes sont prévues pour chaque paire de condensateurs.

Pour un circuit électronique traditionnel d'interface d'un capteur capacitif, tel qu'un accéléromètre MEMS uniaxe ou triaxial, la tension de sortie varie idéalement de manière linéaire par rapport au déplacement de l'électrode commune mobile. Cependant comme le circuit électronique est en principe intégré dans un substrat semi-conducteur, il doit être tenu compte des capacités parasites en entrée, qui s'ajoutent aux capacités des condensateurs du capteur. Ces capacités parasites ne dépendent pratiquement pas du déplacement de l'électrode commune, ce qui crée des non-linéarités. Ainsi, la tension de sortie du circuit électronique ne varie pas linéairement par rapport au déplacement de l'électrode commune mobile. Ces capacités parasites ont aussi pour effet de faire baisser la sensibilité ou le gain du circuit électronique.

Le capteur du type MEMS servant d'accéléromètre est intégré également dans un substrat semi-conducteur, tel qu'un substrat en Silicium. Dans ces conditions, il survient également un problème de non-linéarité lié au potentiel du substrat lors du fonctionnement du capteur. Ce potentiel de substrat est difficile à contrôler sur toute la structure dudit capteur, car le substrat n'est jamais totalement conducteur. L'électrode mobile du capteur peut également être dans une position décalée par rapport aux électrodes fixes dans un mode de repos, ce qui peut créer une erreur de mesure sans calibrage. Du fait de ces non-linéarités, la force électrostatique mesurée n'est pas nulle dans un mode de repos du capteur et du circuit électronique. De par l'influence du potentiel du substrat sur la force électrostatique, cela conduit à une variation de la force réelle mesurée, qui est appliquée sur l'électrode commune mobile, ce qui est un inconvénient.

Pour effectuer généralement une mesure d'une force, d'une accélération ou d'une pression par l'intermédiaire du circuit électronique, les électrodes fixes de deux condensateurs ou des paires de condensateurs sont polarisées ou excitées cycliquement par des tensions de polarité opposée par rapport à une tension de référence au repos. En polarisant les deux électrodes fixes à des niveaux de tension différents, la différence de charges sur l'électrode mobile peut être mesurée et convertie en au moins une tension en sortie du circuit électronique. Lorsque la ou les tensions de sortie sont stabilisées à leur valeur finale, la charge totale sur l'électrode mobile devient nulle. Ces tensions de sortie peuvent être fournies échantillonnées à un circuit de traitement capable de fournir des données d'accélération, de force, de pression ou également de vitesse angulaire selon la structure du capteur.

Il est à noter que traditionnellement avec un circuit électronique intégré d'interface d'un capteur capacitif, la mesure d'une force, d'une accélération ou d'une pression, est dépendante des non-linéarités susmentionnées et de tout écart de tension lié aux composants électroniques non appariés. Pour surmonter ce problème, il a déjà été proposé une solution dans la demande de brevet EP 1 835 263.

Dans la demande de brevet EP 1 835 263, le circuit électronique permet d'opérer une mesure d'un paramètre physique, tel qu'une accélération au moyen d'un capteur capacitif, qui ne comprend qu'une paire de condensateurs fonctionnant en différentiel. L'électrode commune est connectée à un amplificateur à transfert de charges traditionnel dont la sortie est reliée à un premier intégrateur qui fournit une première tension de sortie analogique dans une première série de phases de mesure, et à un second intégrateur qui fournit une seconde tension de sortie analogique dans une seconde série successive de phases de mesure. Ce circuit électronique est composé donc d'une double structure symétrique avec les deux intégrateurs et encore deux blocs d'excitation des électrodes fixes à fonctionnement alternatif totalement symétrique.

Ainsi dans la première série de phases, les électrodes fixes sont d'une part polarisées par la première tension de sortie, et d'autre part polarisées par des niveaux de tension haut et bas d'une source de tension d'alimentation. Dans la seconde série de phases, les électrodes fixes sont d'une part polarisées par la seconde tension de sortie, et d'autre part polarisées inversement à la première série de phases par des niveaux de tension bas et haut de la source de tension d'alimentation. Grâce à cela, un écart de tension (offset) dû à la technologie ou à la variation de tension d'alimentation peut être minimisé voire supprimé à l'aide des deux tensions de sortie analogiques des intégrateurs. De plus, le potentiel du substrat n'a plus une grande importance étant donné que le circuit électronique est conçu avec une double structure identique à fonctionnement totalement symétrique.

Cependant un inconvénient d'un tel circuit électronique du document de brevet EP 1 835 263, est qu'il fournit des signaux de sortie, tels que des tensions de sortie, sous forme analogique. Ceci nécessite l'emploi de deux intégrateurs. Dans ces conditions, cela ne permet pas de réduire considérablement la taille des composants intégrés, ainsi que la consommation électrique du circuit électronique s'il est envisagé de l'intégrer dans un substrat silicium au moyen d'une technologie CMOS à 0.18 $\mu$m ou inférieure. De plus, le circuit électronique est prévu pour n'être relié qu'à une paire de condensateurs d'un capteur capacitif à un seul axe de mesure.

On peut citer à ce titre le document de brevet WO 2004/113930, qui décrit un circuit électronique relié à un capteur capacitif uniaxe ou multiaxe pour la mesure d'une accélération. Par rapport au circuit électronique susmentionné, il est prévu à la suite de l'amplificateur à transfert de charges, qui est relié à l'électrode commune mobile, une logique spécifique à chaque axe de mesure, qui traite des signaux numériques de mesure. Chaque logique fournit en sortie un signal binaire de mesure représentatif d'un niveau de tension de mesure fonction du déplacement de l'électrode mobile par rapport aux électrodes fixes pour chaque axe successivement. Le signal binaire de mesure est fourni successivement pour chaque axe à un convertisseur numérique-analogique dans une boucle d'asservissement. Ce convertisseur fournit dans une phase de chaque cycle de mesure pour un axe sélectionné, une tension de mesure aux électrodes fixes en alternance avec une phase de polarisation des électrodes fixes à une tension haute et une tension basse d'une source de tension d'alimentation. Avec le traitement de signaux numériques en sortie de l'amplificateur, cela réduit la taille des composants électroniques et également la consommation électrique des étages de sortie. Cependant rien n'est prévu pour supprimer les non-linéarités susmentionnées, ainsi que les non-linéarités du convertisseur numérique-analogique, qui peut être composé d'un réseau de condensateurs non appariés, ce qui est un inconvénient. De plus, le temps pour stabiliser avec précision le signal numérique de sortie pour chaque axe de mesure est relativement long, ce qui est un autre inconvénient.

On peut citer également le document de brevet WO 2008/107737, qui décrit un circuit électronique d'interface d'un capteur de mesure, et un procédé de mise en action du circuit électronique. Le capteur de mesure est constitué de deux condensateurs montés en différentiel pour la mesure d'une accélération. Un signal d'entrée analogique de la mesure est mémorisé à la suite d'un amplificateur à transfert de charges dans une phase d'un cycle de mesure suite à une polarisation des électrodes fixes des condensateurs. Le signal analogique est ensuite converti en un signal numérique mémorisé dans une logique du circuit électronique. Le signal numérique est par la suite converti par un convertisseur numérique-analogique en un signal retour analogique sous forme de tension, qui est appliqué à toutes les électrodes du capteur dans une phase successive de chaque cycle de mesure. Dans un cycle de mesure, les électrodes fixes sont polarisées une première fois par une première polarisation et une seconde fois par une seconde polarisation inverse à la première polarisation. Cela permet de supprimer les courants de fuite du circuit électronique. Par contre, un grand nombre d'étapes du procédé est nécessaire pour obtenir en sortie un signal de mesure d'un paramètre physique, ce qui constitue un inconvénient. De plus rien n'est prévu pour compenser d'éventuelles non-linéarités du convertisseur analogique-numérique susceptibles de générer des erreurs de mesure, ce qui est un autre inconvénient.

Le document de brevet US 2011/0154906 A1 décrit un procédé de mesure d'un paramètre physique par un circuit électronique d'interface d'un capteur capacitif. Pour ce faire, le circuit électronique comprend un amplificateur connecté à l'électrode commune par une unité de commutation, une unité logique reliée à l'amplificateur pour fournir des premier et second signaux numériques de mesure, et un convertisseur numérique-analogique pour fournir une tension de mesure aux électrodes. Une polarisation positive et négative des électrodes du capteur capacitif et une polarisation par chaque tension de mesure successive dans chaque cycle de mesure sont effectuées. Au terme des cycles de mesure, l'unité logique est en mesure sur la base des premier et second signaux numériques de mesure obtenus de retirer tout écart de tension lié aux composants électroniques. Cependant il n'est nullement décrit la possibilité de réduire l'effet de la non-linéarité du convertisseur.

Le document de brevet US 2009/0121769 A1 décrit un circuit de compensation d'offset d'un capteur de vitesse lié en entrée du circuit de compensation. Un contrôleur du circuit est en mesure suite à une intégration du signal d'entrée ou à une addition de n échantillons numériques du signal d'entrée d'effectuer une moyenne des valeurs et de compenser l'offset lié au capteur de vitesse. Cependant il n'est nullement décrit la possibilité de réduire l'effet de la non-linéarité du convertisseur.

L'invention a donc pour but de pallier aux inconvénients de l'état de la technique susmentionnés en fournissant un procédé pour réduire rapidement et facilement la non-linéarité notamment d'un convertisseur numérique-analogique dans une boucle d'asservissement, pendant la mesure d'un paramètre physique dans un circuit électronique d'interface d'un capteur capacitif. Une réduction de la taille des composants lors de l'intégration du circuit électronique peut également être réalisée.

A cet effet, l'invention concerne un procédé pour réduire la non-linéarité d'un convertisseur numérique-analogique dans un circuit électronique d'interface d'un capteur capacitif pour la mesure d'un paramètre physique, qui comprend les caractéristiques mentionnées dans la revendication 1.

Des étapes particulières du procédé sont définies dans les revendications dépendantes 2 à 6.

Un avantage du procédé réside dans le fait qu'il est effectué une mesure du paramètre physique à une première tension d'offset de référence différente de zéro et ajoutée dans le convertisseur numérique-analogique. La mesure du paramètre physique, tel qu'une accélération, est effectuée dans un cycle de mesure avec d'une part une phase de polarisation positive des électrodes fixes et d'autre part avec une phase de polarisation négative des électrodes fixes, inverse de la polarisation positive. Un premier signal numérique dépendant d'une intégration positive et un second signal numérique dépendant de l'intégration négative, sont mémorisés dans une unité logique. Une moyenne des deux signaux numériques de mesure est ensuite effectuée pour fournir un signal numérique de sortie relatif à la mesure du paramètre physique en ayant réduit l'effet de la non-linéarité du convertisseur numérique-analogique. Toute valeur d'offset est retirée en sortie par l'addition des premier et second signaux numériques de mesure. Chaque signal numérique de mesure est stocké et rafraîchi dans au moins un registre particulier pendant tous les cycles successifs de mesure et pour chaque axe de mesure du capteur. Les points de chaque courbe de mesure de l'intégration positive et de l'intégration négative peuvent être aussi mémorisés dans une mémoire spécifique de l'unité logique.

Avantageusement, plusieurs mesures du paramètre physique peuvent être effectuées pour plusieurs tensions d'offset successives différentes, et ajoutées successivement à un amplificateur OTA du convertisseur numérique-analogique. Une mémorisation des points de chaque courbe de mesure d'une intégration positive et d'une intégration négative et pour chaque tension d'offset est effectuée. Il peut être prévu d'appliquer 2 à 5 valeurs de tension d'offset de manière à opérer une moyenne en sortie sur toutes les courbes mesurées pour fournir un signal numérique de sortie en ayant réduit fortement l'effet de la non-linéarité du convertisseur numérique-analogique.

A cet effet, l'invention concerne également un circuit électronique d'interface d'un capteur capacitif cité ci-devant pour la mise en oeuvre du procédé de réduction de l'effet de la non-linéarité du convertisseur numérique-analogique, qui comprend les caractéristiques mentionnées dans la revendication 7.

Des formes d'exécution spécifiques du circuit électronique sont définies dans les revendications dépendantes 8 à 10.

Un avantage du circuit électronique d'interface d'un capteur physique réside dans le fait qu'il permet d'obtenir rapidement des signaux numériques de mesure stabilisés en sortie grâce à un traitement numérique directement après l'amplificateur à transfert de charges. Ces signaux numériques de mesure sont traités dans l'unité logique. Deux signaux numériques dépendant d'une polarisation positive et d'une polarisation négative des électrodes fixes de la paire de condensateurs, sont fournis dans l'unité logique. Ceci permet par combinaison des signaux numériques positif et négatif de supprimer tout écart de tension ou tout offset volontairement ajouté pour réduire l'effet de la non-linéarité du convertisseur numérique-analogique. Ainsi le non appariement des condensateurs du réseau de condensateurs du convertisseur numérique-analogique conduisant à la non-linéarité du convertisseur est compensé en partie par les mesures à au moins une tension d'offset ajoutée différente de zéro. Cela réduit la non-linéarité du circuit électronique d'interface pour une mesure plus précise d'une accélération par le circuit électronique.

Les buts, avantages et caractéristiques du procédé pour réduire l'effet de la non-linéarité du convertisseur numérique-analogique sur le circuit électronique d'interface d'un capteur capacitif, ainsi que ledit circuit électronique pour sa mise en oeuvre apparaîtront mieux dans la description suivante en regard des dessins sur lesquels :

- la figure 1 représente de manière simplifiée un circuit électronique d'interface d'un capteur capacitif pour la mise en oeuvre du procédé de réduction de l'effet de la non-linéarité du convertisseur numérique-analogique selon l'invention,
- la figure 2 représente une forme d'exécution d'une partie du convertisseur numérique-analogique du circuit électronique avec un ensemble électronique pour la réduction de l'effet de la non-linéarité du convertisseur pour la mesure d'un paramètre physique, et

- la figure 3 représente un graphe de la fonction de transfert de l'accélération mesurée pour une intégration positive et pour une intégration négative et la courbe résultante de réduction de la non-linéarité du convertisseur numérique-analogique du circuit électronique.

Dans la description suivante comme différents composants du circuit électronique d'interface d'un capteur à condensateurs différentiels sont bien connus dans ce domaine technique, ils ne seront pas tous explicités en détail. L'accent porte principalement sur le procédé de mesure du paramètre physique au moyen d'un circuit électronique qui fournit des signaux numériques de mesure en sortie avec une réduction de l'effet de la non-linéarité du convertisseur numérique-analogique.

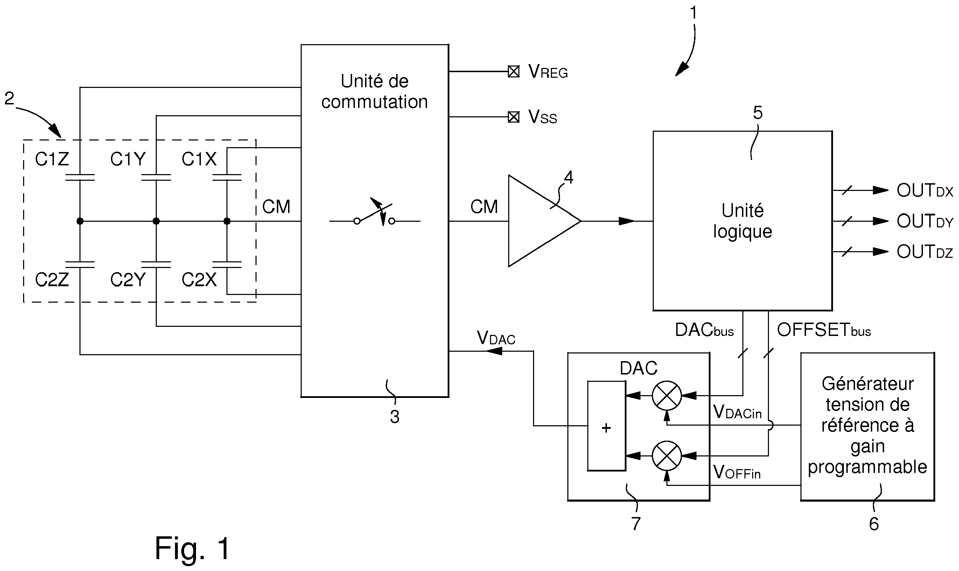

La figure 1 montre un schéma simplifié des différents composants du circuit électronique 1 d'interface d'un capteur capacitif 2 selon l'invention. Dans cette forme d'exécution, il est prévu de relier un capteur capacitif 2 triaxial du type MEMS à masse unique au circuit électronique 1, même s'il est tout à fait concevable également de connecter un capteur triaxial à trois masses mobiles ou un capteur uniaxe. Ce capteur capacitif est donc composé de trois paires de condensateurs C1X, C2X, C1Y, C2Y, C1Z et C2Z. Les deux condensateurs de chaque paire sont montés en différentiel. Une électrode commune CM des paires de condensateurs est susceptible de se déplacer sous l'action notamment d'une force entre deux électrodes fixes de chaque paire de condensateurs pour effectuer une mesure tenant compte des trois axes X, Y et Z. Le circuit électronique 1 peut fournir des signaux numériques de mesure pour chaque axe, qui sont relatifs à un paramètre physique, tel qu'une accélération, une vitesse angulaire, une pression ou une force, en fonction du déplacement de l'électrode commune mobile. Dans le cas d'une mesure d'accélération, le circuit électronique peut être configuré pour fournir des signaux numériques de mesure entre des valeurs minimum et maximum d'accélération. Il peut être choisi par exemple de configurer le circuit électronique pour fournir des signaux numériques de mesure dans la gamme de -2g à +2g d'accélération. Une variation de tension de l'ordre de 3 à 20 mV peut être comptée pour 1 g d'accélération.

L'électrode mobile CM peut faire partie d'une armature du capteur maintenue élastiquement dans une position centrale au repos entre les deux électrodes fixes de chaque paire de condensateurs C1X, C2X, C1Y, C2Y, C1Z et C2Z. Le circuit électronique 1 peut être alimenté par une source de tension continue non représentée, qui fournit à une première borne une tension régulée haute $V_{REG}$ et à une seconde borne une tension basse $V_{SS}$. La tension basse peut être définie à 0 V, alors que la tension régulée haute peut être fixée à 1.65 V par exemple. L'électrode fixe de chaque condensateur peut être polarisée dans une phase d'un cycle de mesure, soit à la tension haute $V_{REG}$, soit à la tension basse $V_{SS}$ dans un mode de fonctionnement du circuit électronique. De ce fait, comme les deux condensateurs C1X, C2X, C1Y, C2Y, C1Z et C2Z de chaque paire ont une valeur capacitive égale dans un mode de repos du capteur 2, la tension sur l'électrode commune CM est de préférence égale au repos à une tension intermédiaire $V_{REG}/2$ entre la tension régulée $V_{REG}$ et la tension basse $V_{SS}$ à 0 V.

Les signaux numériques de mesure fournis par le circuit électronique 1 sont proportionnels pour deux condensateurs C1 et C2 à (C1-C2)/(C1+C2). Une fois les signaux numériques de mesure stabilisés à une mesure finale du paramètre physique, tout écoulement de charges sur les deux condensateurs de chaque paire s'annule. Ainsi le but du circuit électronique consiste à trouver une tension à appliquer sur chaque électrode fixe dans une phase d'égalisation des charges, qui satisfait à $(V_{REG}-V_{DAC})\cdot C1 = (V_{DAC}-V_{SS})\cdot C2$. Ceci est atteint quand $V_{DAC} = (V_{REG}/2)\cdot(1+(C1-C2)/(C1+C2))$.

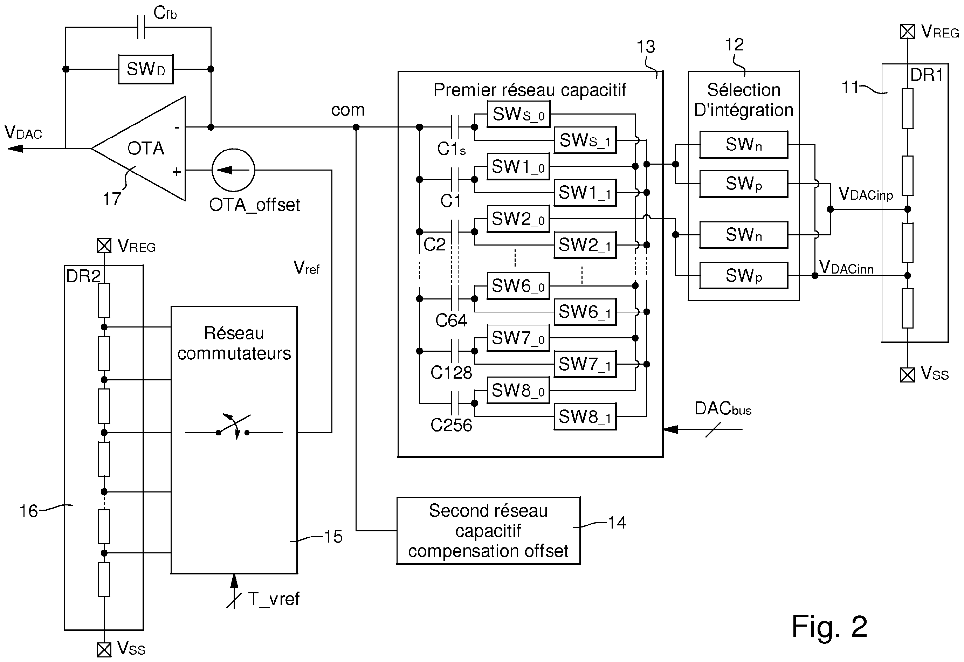

Le circuit électronique 1 comprend un amplificateur à transfert de charges du type comparateur 4, qui est relié directement à l'électrode mobile CM des condensateurs par l'intermédiaire d'une unité de commutation 3. L'unité de commutation 3 reçoit les tensions $V_{REG}$, $V_{SS}$ et $V_{DAC}$ à appliquer aux électrodes du capteur selon les phases d'un cycle de mesure. La tension régulée $V_{REG}$ et la tension basse $V_{SS}$ sont appliquées aux électrodes fixes, alors que la tension $V_{DAC}$, d'un convertisseur numérique-analogique 7 en contre-réaction, est appliquée à toutes les électrodes. Le convertisseur numérique-analogique comprend au moins un réseau de condensateurs pour opérer la conversion numérique-analogique. Cependant l'ensemble de ces condensateurs, qui ont des valeurs capacitives respectives correspondant à des puissances de 2 (1, 2, 4, 8, 16, ..., 64, ..., 256) ne peuvent généralement pas être tous bien appariés. Ce convertisseur comprend donc un ensemble électronique permettant de réduire l'effet de la non-linéarité de ce convertisseur pour une mesure d'un paramètre physique comme expliqué ci-après en référence à la figure 2.

L'amplificateur comparateur 4 est de conception très simple du type de celui décrit dans l'article intitulé "A 1 mV MOS Comparator" de la revue IEEE J. Solid-State Circuits, vol. SC-13. pp. 294-298 de juin 1978. Cet amplificateur comparateur 4 comprend généralement un condensateur en entrée relié à l'électrode commune CM, suivi d'étages amplificateurs pour fournir en sortie un signal de forme numérique en tout ou rien. Cet amplificateur à transfert de charges a un très haut gain. Le signal de sortie de l'amplificateur est à l'état "1" proche de la tension régulée $V_{REG}$ quand la tension sur l'électrode mobile CM augmente par l'accumulation de charges positives dans les cycles de mesure. Par contre, le signal de sortie de l'amplificateur passe à l'état "0" proche de la tension basse $V_{SS}$ quand la tension sur l'électrode mobile CM diminue par l'accumulation de charges négatives dans les cycles de mesure.

Le circuit électronique 1 comprend encore une unité logique 5, qui comprend notamment des moyens de mémorisation, un processeur cadencé par un signal d'horloge traditionnel, au moins un compteur relié au processeur, et plusieurs registres pour stocker des mots binaires de mesure pour chaque axe de mesure. Il est prévu deux registres non représentés par axe de mesure, ce qui porte à six registres pour les trois axes de mesure. Pour chaque axe, un premier registre reçoit un premier signal numérique de mesure provenant d'une polarisation définie positive (pol à "0") des électrodes fixes de la paire de condensateurs correspondante, alors qu'un second registre reçoit un second signal numérique de mesure provenant d'une polarisation définie négative (pol à "1 ") des électrodes fixes de la paire de condensateurs correspondante. Comme expliqué ci-après, la polarisation négative est simplement une polarisation inversée de la polarisation positive. Ceci permet à l'unité logique 5 par combinaison ou addition des deux registres par axe de mesure de fournir un signal numérique de sortie par $OUT_{DX}$, $OUT_{DY}$, $OUT_{DZ}$, dans lequel tout écart de tension (offset) a été supprimé.

Le signal numérique de mesure de chaque registre peut être un mot binaire par exemple sur 10 bits. Le compteur en liaison du processeur permet de placer un état "1" ou un état "0" dans une position du mot binaire sur la base du signal fourni par l'amplificateur comparateur 4. Selon le procédé de mesure, il peut être utilisé un algorithme de dichotomie pour les premiers cycles de mesure avant l'obtention d'une valeur finale. Ce sont donc les bits de poids fort qui sont modifiés dans chaque registre pour mettre en fonction l'algorithme de dichotomie mémorisé dans les moyens de mémorisation. Dans la phase de dichotomie, le compteur de bits doit changer selon bit = comp XNOR pol, où comp est la valeur de sortie de l'amplificateur comparateur 4, et pol définit la polarisation positive ou la polarisation négative. A chaque cycle de mesure successif et pour chaque axe, le mot binaire de chaque registre est adapté.

Chaque mot binaire DACbus des registres est fourni successivement dans chaque cycle de mesure à un convertisseur numérique-analogique DAC 7 pour convertir notamment le mot binaire DACbus en une tension de sortie $V_{DAC}$. Cette tension de sortie du DAC permet de décharger dans une des phases du cycle de mesure tous les condensateurs C1X, C2X, C1Y, C2Y, C1Z, C2Z et CM à une valeur de tension dépendant du mot binaire DACbus d'un axe particulier. Le mot binaire DACbus est multiplié dans un premier multiplicateur dans le convertisseur numérique-analogique 7 par une tension de référence $V_{DACin}$, qui provient d'un générateur de tension de référence à gain programmable 6. Cette tension de référence peut être fournie au moyen d'un diviseur résistif connecté entre la tension régulée $V_{REG}$ et la masse $V_{SS}$. Comme expliqué ci-après en référence à la figure 2, deux tensions de référence $V_{DACin}$ sont prévues pour une intégration positive et pour une intégration négative. Le premier multiplicateur est de préférence défini comme un amplificateur OTA comme expliqué à la figure 2 ci-après avec une tension d'offset de modulation fournie pour la réduction de la non-linéarité du convertisseur.

L'unité logique 5 fournit également un mot binaire d'ajustage OFFSETbus (10 bits) d'un écart de tension relatif au capteur MEMS en entrée. Ce mot binaire d'ajustage OFFSETbus est multiplié dans un second multiplicateur dans le convertisseur numérique-analogique 7 avec une tension d'ajustage $V_{OFFin}$, qui provient du générateur de tension de référence à gain programmable 6. Cette tension d'ajustage $V_{OFFin}$ peut également être obtenue au moyen d'un diviseur résistif connecté entre la tension régulée $V_{REG}$ et la masse $V_{SS}$. Une addition des tensions de sortie des deux multiplicateurs du convertisseur 7 est ensuite effectuée de manière que le convertisseur numérique-analogique fournisse en sortie la tension $V_{DAC}$. Une étape préliminaire de calibrage peut être effectuée pour corriger l'écart de tension (offset) du capteur MEMS avant la mesure du paramètre physique du circuit électronique 1.

Comme les mots binaires DACbus et OFFSETbus sont sur 10 bits de 0 à 1023, on peut exprimer la tension de sortie $V_{DAC}$ provenant d'une polarisation positive (polarité "0") des électrodes fixes d'une part et d'une polarisation négative (polarité "1 ") des électrodes fixes d'autre part. Ces deux équations eq(0) et eq(1) des deux tensions $V_{DAC}$ sont exprimées comme suit :

$$eq(0): \ V_{DAC}(0) = V_{REG}/2 + V_{DACoffset} + (DACbus(0)-512) \cdot K_{DAC} \cdot V_{REG} +$$
$$(OFFSETbus-512) \cdot K_{OFF} \cdot V_{REG}$$

$$eq(1): \ V_{DAC}(1) = V_{REG}/2 + V_{DACoffset} - (DACbus(1)-512) \cdot K_{DAC} \cdot V_{REG} -$$
$$(OFFSETbus-512) \cdot K_{OFF} \cdot V_{REG}$$

$K_{DAC}$ est un facteur qui définit le gain du système. Ce gain peut être programmable par exemple en générant une tension $V_{DACin}$ qui provient d'un diviseur résistif du générateur de tension de référence 6. $K_{OFF}$ est un facteur, qui définit le gain de la circuiterie d'ajustage de l'écart de tension (offset) du capteur MEMS. Ce gain peut être adapté selon la plage d'ajustage désirée par exemple en générant une tension $V_{OFFin}$ qui provient d'un autre diviseur résistif du générateur de tension de référence 6. DACbus(O) définit le mot binaire sur 10 bits, qui provient d'un premier registre de l'unité logique 5, qui est appliqué au convertisseur DAC 7 durant les phases de la polarisation positive. Ce mot binaire est défini de 0 à 1023. DACbus(1) définit le mot binaire sur 10 bits, qui provient d'un second registre de l'unité logique 5, qui est appliqué au convertisseur DAC 7 durant les phases de la polarisation négative. Ce mot binaire est défini de 0 à 1023. A l'équilibre dans une position de repos, le code de chaque DACbus est défini avec le code sur 10 bits "1000000000" pour une valeur 512, qui doit définir la tension intermédiaire $V_{REG}/2$ sans écart de tension. OFFSETbus définit le mot binaire d'ajustage sur 10 bits, qui est appliqué au convertisseur DAC 7 pour réaliser la correction de l'écart de tension (offset) lié au capteur MEMS. $V_{DACoffset}$ représente l'écart parasite de tension (offset) du convertisseur DAC 7, ce qu'on veut notamment supprimer.

Il est encore à noter que DACbus(0) peut être différent de DACbus(1) si une accélération est mesurée, car ces mots binaires dépendent de l'état de la polarisation appliquée aux électrodes fixes. Par contre OFFSETbus ne dépend absolument pas de la polarisation appliquée aux électrodes fixes. Ainsi OFFSETbus est choisi de manière définitive après l'étape préliminaire de calibrage du capteur MEMS lié au circuit électronique comme indiqué ci-devant. Ce mot binaire d'ajustage peut être mémorisé dans les moyens de mémorisation de l'unité logique 5.

Pour opérer une mesure d'un paramètre physique, tel que par exemple une accélération, un cycle de mesure est composé généralement de 12 phases successives. Dans les 12 phases successives, il est prévu une fois une polarisation positive des électrodes fixes des trois paires de condensateurs, et une fois une polarisation négative des électrodes fixes des trois paires de condensateurs. Entre chaque phase de polarisation, une tension $V_{DAC}$ est appliquée sur les électrodes fixes C1X, C2X, C1Y, C2Y, C1Z, C2Z en fonction de chaque mot binaire successif des registres de l'unité logique 5. La durée de chaque phase peut être de l'ordre de 2 µs. Dans une phase dénommée P0, toutes les électrodes des condensateurs sont polarisées avec la tension $V_{DAC}$ relatif à un des axes de mesure. Dans une phase dénommée P1, il est appliqué sur les électrodes fixes des condensateurs d'un des axes de mesure une polarisation positive pour la première demi-période d'un cycle, ou une polarisation négative pour la seconde demi-période d'un cycle de mesure. Trois phases P1 par demi-période du cycle de mesure sont prévues pour chaque axe de mesure respectif.

Plusieurs cycles de 12 phases se répètent successivement pour effectuer une mesure du paramètre physique, tel qu'une accélération au moyen du capteur triaxial. Une conversion pour un axe de mesure correspond à 16 transferts de charges. La durée de la conversion pour les trois axes de mesure peut être inférieure à 500 µs, si chaque phase est de durée de l'ordre de 2 µs ou inférieure. Dans les 8 premiers cycles de mesure, il peut être utilisé l'algorithme de dichotomie, alors que pour les 8 cycles suivants de mesure, il peut être utilisé un sur-échantillonnage.

Pour comprendre la manière de réduire l'effet de la non-linéarité du convertisseur numérique-analogique sur le circuit électronique, on peut se référer à la figure 2, qui représente une partie du convertisseur avec un ensemble électronique pour la réduction de la non-linéarité du convertisseur pour la mesure d'un paramètre physique. Une non-linéarité dans le convertisseur numérique-analogique génère une non-linéarité de la fonction de transfert de l'accélération (valeur numérique) en fonction de l'accélération à mesurer par le capteur capacitif. Cette partie du convertisseur de la figure 2 ne comprend pas le multiplicateur du mot binaire d'ajustage OFFSETbus du capteur MEMS avec une tension d'ajustage $V_{OFFin}$, qui provient du générateur de tension de référence à gain programmable.

Il est tout d'abord à noter que la caractéristique la plus importante de ce circuit électronique est que la valeur numérique de chaque signal numérique de mesure, qui représente l'accélération ne dépend pas de tout offset électronique. En effet, les valeurs numériques fournie par le bus DACbus au terme de chaque phase positive et négative sont par exemple pour 1 g d'accélération dans la gamme de +/-2 g données selon les équations suivantes :

$$DAC\_Ap = 512-offset+128 \qquad \text{(compteur positif)}$$

$$DAC\_An = 512+offset+128 \qquad \text{(compteur négatif)}$$

et

$$Accélération\_numérique = DAC\_Ap+DAC\_An-1024$$
$$= (512-offset+128)+(512+offset+128)-1024 = 256$$

Si la partie analogique du circuit électronique d'interface capteur capacitif travaille plutôt dans la gamme de +/- 4 g, et si la pleine échelle est réduite à 2 g par une multiplication par 2 du code numérique, 1 g d'accélération est définie selon les équations suivantes :

$$DAC\_Ap = 512 - offset + 64 \qquad \text{(compteur positif)}$$

$$DAC\_An = 512 + offset + 64 \qquad \text{(compteur négatif)}$$

et

$$Accélération\_numérique = 2 \cdot (DAC\_Ap + DAC\_An - 1024) = 256$$

On peut remarquer que les valeurs d'Accélération_numérique ne dépendent absolument pas de l'offset présent ou ajouté au circuit électronique, et que pour des valeurs d'Accélération_numérique justes en dessous de 1 g, le code du DACbus peut être de 512+63 si l'offset est égal à 0.

Les équations ci-dessus sont correctes uniquement si le convertisseur DAC est parfaitement linéaire. Si le convertisseur DAC est réalisé avec une technique de condensateurs pondérés, quelques non linéarités apparaissent principalement lorsque les bits de poids fort (MSB) des codes du DACbus sont changés.

Le convertisseur numérique-analogique comprend donc un amplificateur OTA 17 pour fournir en sortie la tension de mesure $V_{DAC}$ aux électrodes du capteur capacitif dans chaque phase P0. Un commutateur $SW_D$ et un condensateur d'intégration Cfb en parallèle relient la sortie de l'amplificateur OTA à une entrée négative de l'amplificateur dans la boucle d'asservissement. Dans une phase P1 du cycle de mesure, le convertisseur est dans un état de mise à zéro, l'amplificateur OTA est dans un mode suiveur, et le condensateur d'intégration Cfb est court-circuité par le commutateur $SW_D$. Dans cette phase P1, les électrodes d'une paire de condensateurs du capteur MEMS en entrée sont polarisées selon une polarisation positive ou une polarisation négative. Chaque paire de condensateurs est successivement polarisée dans chaque phase P1 dans un cycle de mesure. Par contre dans la phase P0, les charges mémorisées sur les condensateurs des réseaux capacitifs sont transférées dans le signal com et au condensateur Cfb, ainsi la valeur de sortie $V_{DAC}$ est prête au terme de la phase P0 pour appliquer cette tension $V_{DAC}$ à toutes les électrodes fixes des condensateurs du capteur MEMS.

Le convertisseur numérique-analogique comprend encore un premier réseau capacitif 13 et un second réseau capacitif de compensation d'offset 14, non décrit. Une électrode de tous les condensateurs C1s, C1, C2, ..., C64, C128, C256 est reliée à l'entrée négative de l'amplificateur OTA 17 en fournissant un signal com de transfert de charges. L'autre électrode de chaque condensateur du premier réseau 13 est reliée par l'intermédiaire d'un premier commutateur respectif $SW_{S\_0}$, $SW_{1\_0}$, $SW_{2\_0}$, $SW_{6\_0}$, $SW_{7\_0}$, $SW_{8\_0}$, et d'un second commutateur respectif $SW_{S\_1}$, $SW_{1\_1}$, $SW_{2\_1}$, $SW_{6\_1}$, $SW_{7\_1}$, $SW_{8\_1}$ à une unité de sélection d'intégration positive et négative 12. Ces commutateurs sont utilisés tous les deux dans les polarisations positive et négative, mais leur ordre de commutation est inverse selon le signe du mot binaire DACbus fourni par l'unité logique.

Le premier réseau de condensateurs 13 est donc utilisé dans la boucle d'asservissement en étant commandé par le mot binaire DACbus sur 10 bits provenant de l'unité logique. Ce mot binaire DACbus est fourni de chacun des 6 registres suite à la polarisation positive et à la polarisation négative et pour chaque axe successivement. Les condensateurs du premier réseau ont des valeurs correspondant à des puissances de 2. La taille de chaque condensateur est établie normalement sur la base d'un condensateur unitaire C1, avec la valeur capacitive de C2 égale à 2·C1, jusqu'à la valeur capacitive de C256 égale 256·C1. Le condensateur C1 s a une valeur capacitive correspondant à la valeur capacitive de C1. Ce condensateur C1 s et les deux commutateurs $SW_{S\_0}$, $SW_{S\_1}$ sont utilisés pour les codes DACbus à "1000000000" (valeur négative), et cela décale de - 1 LSB, lorsque le code "0111111111 " est actif par rapport au code "1000000000", sinon ces deux codes correspondraient à aucun transfert de charges. Les condensateurs C1 à C256 ne sont généralement pas bien appariés et ne correspondent pas exactement à la valeur réelle en puissance de 2 par rapport à la valeur capacitive du condensateur unitaire C1. Cela crée donc une non-linéarité dans la boucle d'asservissement en fonction de l'accélération mesurée par le capteur capacitif MEMS en entrée de l'interface du circuit électronique. Par exemple le gros condensateur C64, dont la valeur devrait être 64·C1 peut valoir plutôt C66 au lieu de C64, ce qui induit une erreur dans la boucle d'asservissement de la mesure de l'accélération notamment lors de la transition de C63 (C1+C2+C4+C8+C16+C32) à C64.

L'unité de sélection d'intégration positive et négative 12 comprend deux commutateurs SWp pour la polarisation positive et deux commutateurs SWn pour la polarisation négative. Deux tensions de référence $V_{DACinp}$ et $V_{DACinn}$ provenant d'un premier diviseur résistif DR1 11, qui peut être dans le générateur de tension de référence, sont fournies à l'unité de sélection 12. Ce premier diviseur résistif DR1 11 est relié entre $V_{REG}$ et $V_{SS}$. Lorsqu'il s'agit d'une intégration négative, la tension de référence $V_{DACinp}$ est fournie aux commutateurs $SW_{S\_0}$, $SW_{1\_0}$, $SW_{2\_0}$, $SW_{6\_0}$, $SW_{7\_0}$, $SW_{8\_0}$ du premier réseau de condensateurs, alors que la tension de référence $V_{DACinn}$ est fournie aux commutateurs $SW_{S\_1}$,

$SW_{1\_1}$, $SW_{2\_1}$, $SW_{6\_1}$, $SW_{7\_1}$, $SW_{8\_1}$. Lorsqu'il s'agit d'une intégration positive, la tension de référence $V_{DACinn}$ est fournie aux commutateurs $SW_{S\_0}$, $SW_{1\_0}$, $SW_{2\_0}$, $SW_{6\_0}$, $SW_{7\_0}$, $SW_{8\_0}$ du premier réseau de condensateurs, alors que la tension de référence $V_{DACinp}$ est fournie aux commutateurs $SW_{S\_1}$, $SW_{1\_1}$, $SW_{2\_1}$, $SW_{6\_1}$, $SW_{7\_1}$, $SW_{8\_1}$. Ainsi les tensions $V_{DACinn}$ et $V_{DACinp}$ appliquées aux commutateurs sont inversées entre l'intégration positive et l'intégration négative. Cela permet de retourner le signe des charges transférées sur le signal "com" du convertisseur.

Pour pouvoir réduire l'effet de la non-linéarité du convertisseur numérique-analogique sur le circuit électronique, il est encore prévu d'ajouter une tension définie d'offset dvref à la tension de référence $V_{REG}/2$ du signal de tension Vref fourni à l'entrée positive de l'amplificateur OTA. Il doit encore être tenu compte d'un offset de l'OTA, qui est encore ajouté à ce signal de tension de référence et constitue une source de tension parasite due à des erreurs d'appariement des éléments liés à l'amplificateur OTA. La tension définie d'offset dvref ajoutée à la tension $V_{REG}/2$ est fournie par l'intermédiaire d'un second diviseur résistif 16 relié à un réseau de commutateurs 15, qui est commandé par un mot d'adaptation T_vref sur 4 bits. Ce réseau de commutateurs peut être un multiplexeur relié aux résistances du second diviseur résistif et commandé par le mot d'adaptation T_vref. Chaque bit de ce mot d'adaptation permet de fournir une différence de tension de l'ordre de 3.3 mV. La plage de tension sélectionnable autour de $V_{REG}/2$ peut aller de -26.4 mV à +23.1 mV.

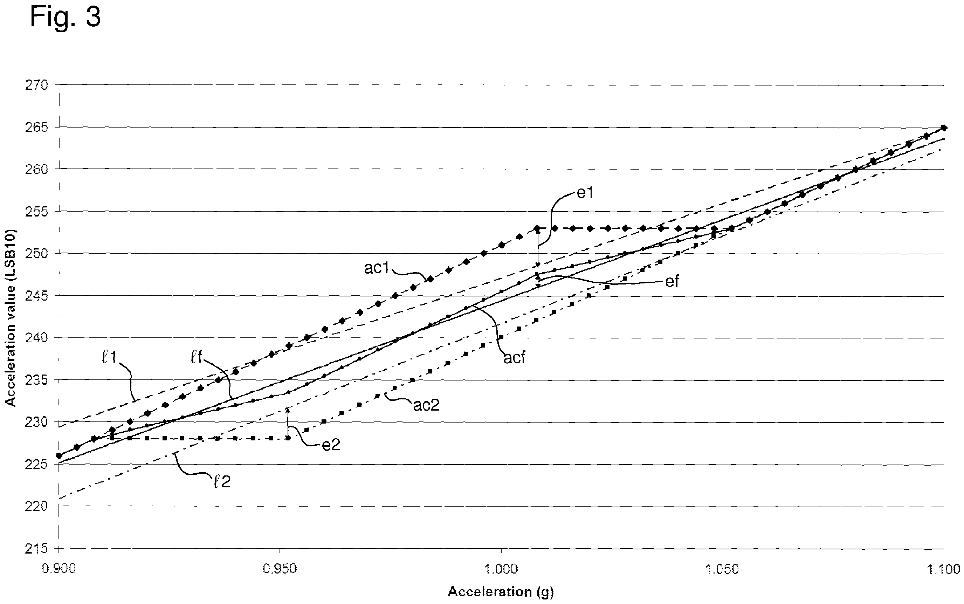

Comme montré ci-après en référence à la figure 3, il suffit normalement d'ajouter ou soustraire une tension définie d'offset dvref non nulle à la tension $V_{REG}/2$ dans la tension de référence Vref fournie à l'entrée positive de l'amplificateur OTA 17 pour pouvoir réduire l'effet de la non-linéarité du convertisseur numérique-analogique sur le circuit électronique. Normalement cette tension définie d'offset dvref doit être plus grande ou plus petite à la tension OTA_offset de manière à avoir à l'entrée positive de l'amplificateur OTA une valeur de tension de référence (offset) différente de $V_{REG}/2$. Pour ce faire, une moyenne de la courbe d'une intégration positive avec les valeurs numériques des registres correspondants de l'unité logique, et de la courbe d'une intégration négative peut être effectuée. Avec cela l'erreur due à un mauvais appariement de l'un ou l'autre condensateur du premier réseau capacitif est réduite de moitié. De préférence plusieurs mesures à différentes tensions différentes d'offset dvref sont effectuées pour déterminer par exemple plusieurs courbes, par exemple cinq courbes de mesures. La moyenne de ces cinq courbes permet de réduire encore plus fortement l'effet de la non-linéarité du convertisseur numérique-analogique sur le circuit électronique. De par la polarisation positive et la polarisation négative, tout offset dvref ajouté ou soustrait de la tension $V_{REG}/2$, est, bien entendu, éliminé dans les signaux numériques de sortie de l'unité logique et uniquement la valeur d'accélération est déterminée dans ces signaux numériques.

Pour une intégration positive, la tension $V_{DAC}$ fournie en sortie du convertisseur numérique-analogique est déterminée par l'équation suivante :

$$V_{DAC} = Vref + OTA\_offset + (V_{DAC\_inp} - V_{DAC\_inn}) \cdot (C1/Cfb) \cdot (DACbus - 512)$$

$$V_{DAC} = V_{REG}/2 + dvref + OTA\_offset + (V_{DAC\_inp} - V_{DAC\_inn}) \cdot (C1/Cfb) \cdot (DACbus - 512)$$

où DACbus est une valeur numérique sur 10 bits et dvref est une différence de tension à ajouté à $V_{REG}/2$ dans le signal de tension de référence Vref.

L'unité logique relié au convertisseur modifie DACbus, jusqu'à ce que l'équilibre des charges est atteint dans le capteur MEMS, et ceci intervient quand :

$$V_{DAC} = V_{REG}/2 \cdot (1 + (C1 - C2)/(C1 + C2))$$

Ainsi :

$$dvref + OTA\_offset + (V_{DAC\_inp} - V_{DAC\_inn}) \cdot (C1/Cfb) \cdot (DACbus - 512) = (V_{REG}/2) \cdot (C1 - C2)/(C1 + C2))$$

ce qui mène à :

$$DACbus = 512+(Cfb/C1)\cdot((V_{REG}/2)\cdot(C1-C2)/(C1+C2)-(dvref+$$
$$OTA\_offset))/(V_{DAC\_inp}-V_{DAC\_inn})$$

$$DACbus = 512-(Cfb/C1)\cdot(dvref+OTA\_offset)/(V_{DAC\_inp}-V_{DAC\_inn})+$$
$$(Cfb/C1)\cdot((V_{REG}/2)\cdot(C1-C2)/(C1+C2))/(V_{DAC\_inp}-V_{DAC\_inn})$$

Pour une intégration négative, la tension $V_{DAC}$ fournie en sortie du convertisseur numérique-analogique est déterminée par l'équation suivante :

$$V_{DAC} = V_{REG}/2+dvref+OTA\_offset-(V_{DAC\_inp}-V_{DAC\_inn})\cdot(C1/Cfb)\cdot(DACbus-512)$$

et :

$$V_{DAC} = (V_{REG}/2)\cdot(1-(C1-C2)/(C1+C2))$$

Ainsi :

$$dvref+OTA\_offset-(V_{DAC\_inp}-V_{DAC\_inn})\cdot(C1/Cfb)\cdot( DACbus-512)$$
$$= -(V_{REG}/2)\cdot(C1-C2)/(C1+C2))$$

ce qui mène à :

$$DACbus = 512+(Cfb/C1)\cdot((V_{REG}/2)\cdot(C1-C2)/(C1+C2)+(dvref+$$
$$OTA\_offset))/(V_{DAC\_inp}-V_{DAC\_inn})$$

$$DACbus = 512+(Cfb/C1)\cdot(dvref+OTA\_offset)/(V_{DAC\_inp}-V_{DAC\_inn})+$$
$$(Cfb/C1)\cdot((V_{REG}/2)\cdot(C1-C2)/(C1+C2))/(V_{DAC\_inp}-V_{DAC\_inn})$$

La valeur (dvref+OTA_offset) correspond à l'écart ou offset du circuit électronique. Cette valeur apparaît dans le terme $(Cfb/C1)\cdot(dvref+OTA\_offset)/(V_{DAC\_inp}-V_{DAC\_jnn})$ avec des signes opposés pour les intégrations positives et négatives. Cela génère une erreur sur les valeurs finales des codes DACbus pour les intégrations positive et négative. On remarque que l'erreur sur la tension Vref est équivalente à l'offset de l'OTA. Ainsi il est possible de moduler la tension d'offset en changeant la valeur du mot d'ajustage T_vref sur 4 bits de manière à changer la tension de référence Vref fournie à l'entrée positive de l'amplificateur OTA. En changeant la tension d'offset dvref, il est possible de changer les codes DACbus (DAC_Ap et DAC_An) sans changer la valeur finale d'accélération, qui est une valeur numérique générée par l'addition de DAC_Ap et de DAC_An. Cette tension d'offset dvref peut être plusieurs fois changée dans des cycles de mesure grâce au mot d'ajustage T_vref. Cela permet de déterminer plusieurs courbes et de moyenner ces courbes pour réduire au maximum l'effet de toute non-linéarité du circuit électronique.

La figure 3 représente justement une première courbe ac1 d'une intégration positive, une seconde courbe ac2 d'une intégration négative et une courbe acf de la moyenne des deux autres courbes pour réduire la non-linéarité du convertisseur lors de la mesure notamment d'une accélération. La tension définie d'offset dvref est choisie pour cette figure 3 à une valeur de 0.2 mV. La première courbe s'écarte d'une erreur maximum e1 de la courbe idéale I1 pour une mesure d'accélération de l'ordre de 1 g. La seconde courbe s'écarte d'une erreur maximum e2 de la courbe idéale I2 pour la mesure d'1 g d'accélération. L'erreur maximum ef de la courbe de moyenne des deux autres courbes par rapport à une courbe idéale If n'est plus que de la moitié par rapport à l'erreur maximum e1 et e2 des deux autres courbes. Bien entendu s'il est effectué une moyenne de plusieurs courbes d'intégrations positive et négative, l'erreur maximale finale de la courbe de moyenne devient minimale et la courbe moyenne s'approche de la courbe idéale. De ce fait, cela permet de pallier efficacement à un non appariement des condensateurs du premier réseau capacitif du convertisseur numérique-analogique, ce qui est recherché par la présente invention.

A partir de la description qui vient d'être faite, de multiples variantes de réalisation du procédé pour réduire l'effet de la non-linéarité d'un convertisseur numérique-analogique sur un circuit électronique de mesure d'un paramètre physique, ainsi que du circuit électronique d'interface du capteur capacitif pour sa mise en oeuvre peuvent être conçues par l'homme du métier sans sortir du cadre de l'invention définie par les revendications. Il peut être envisagé de modifier la durée de chaque phase l'une par rapport à l'autre ou la durée de chaque cycle durant les opérations de détermination des différentes courbes à moyenner ou de mesure du paramètre physique. Il peut être prévu de modifier l'ordre des polarisations positive et négative dans chaque cycle de mesure. Il peut aussi être placé dans chaque cycle de mesure au moins deux phases supplémentaires d'un test de fonctionnalité du circuit électronique.

**Revendications**

**1.**    Procédé pour réduire l'effet de la non-linéarité d'un convertisseur numérique-analogique sur un circuit électronique (1) d'interface d'un capteur capacitif (2) pour une mesure d'un paramètre physique, ledit capteur capacitif (2) comprenant au moins deux condensateurs (C1X, C2X) montés en différentiel, dont une électrode commune (CM) est susceptible de se déplacer par rapport à chaque électrode fixe des deux condensateurs pour modifier la valeur capacitive de chaque condensateur lors de la mesure du paramètre physique, ledit circuit électronique comprenant un amplificateur à transfert de charges (4) connecté à l'électrode commune (CM) par l'intermédiaire d'une unité de commutation (3), une unité logique (5) reliée à la sortie de l'amplificateur pour un traitement numérique de l'information fournie par l'amplificateur et la fourniture de signaux numériques de mesure, et un convertisseur numérique-analogique (7) susceptible de fournir une tension de mesure ($V_{DAC}$) aux électrodes par l'intermédiaire de l'unité de commutation (3), la tension de mesure étant définie sur la base d'une conversion d'un mot binaire (DACbus) définissant au moins un des signaux numériques de mesure, le procédé comprenant dans chaque cycle successif de mesure des étapes consistant à :

a) polariser les électrodes des condensateurs (C1X, C2X, CM) par l'intermédiaire de l'unité de commutation (3) avec une tension de mesure ($V_{DAC}$) fournie par le convertisseur numérique-analogique (7) sur la base d'un premier signal numérique de mesure stocké dans au moins un premier registre de l'unité logique (5) d'un précédent cycle ou d'un premier mot binaire initial fourni par l'unité logique (5), le premier signal numérique dépendant d'une première polarisation des électrodes fixes des condensateurs,

b) polariser l'électrode fixe du premier condensateur (C1X) à une tension régulée haute ($V_{REG}$) d'une source de tension d'alimentation du circuit électronique, et à polariser l'électrode fixe du second condensateur (C2X) à une tension basse ($V_{SS}$) de la source de tension d'alimentation, pour adapter le premier signal numérique de mesure dans l'unité logique (5),

c) polariser les électrodes des condensateurs (C1X, C2X, CM) par l'intermédiaire de l'unité de commutation (3) avec une tension de mesure ($V_{DAC}$) fournie par le convertisseur numérique-analogique (7) sur la base d'un second signal numérique de mesure stocké dans au moins un second registre de l'unité logique (5) d'un précédent cycle ou d'un second mot binaire initial fourni par l'unité logique (5), le second signal numérique dépendant d'une seconde polarisation inverse de la première polarisation des électrodes fixes des condensateurs, et

d) polariser l'électrode fixe du premier condensateur (C1X) à une tension basse ($V_{SS}$) de la source de tension d'alimentation du circuit électronique, et à polariser l'électrode fixe du second condensateur (C2X) à une tension régulée haute ($V_{REG}$) de la source de tension d'alimentation, pour adapter le second signal numérique de mesure dans l'unité logique (5),

**caractérisé en ce qu'**initialement ou pendant les cycles de mesure du paramètre physique, une tension définie d'offset (Vref) d'un ensemble électronique (15, 16) du convertisseur numérique-analogique (7) est introduite dans le convertisseur numérique-analogique pour modifier ou moduler les premier et second signaux numériques, **en ce qu'**une moyenne d'une courbe d'une intégration positive et d'une courbe d'une intégration négative est effectuée avec des valeurs numériques stockées dans les premier et second registres de l'unité logique (5), et **en ce qu'**une moyenne des premier et second signaux numériques est effectuée pour fournir un signal numérique de sortie ($OUT_{DX}$) relatif à la mesure du paramètre physique en ayant réduit l'effet de la non-linéarité du convertisseur numérique-analogique, qui comprend un réseau capacitif (13) commandé successivement par le mot binaire (DACbus) du premier registre et par le mot binaire (DACbus) du second registre.

2. Procédé selon la revendication 1, **caractérisé en ce que** plusieurs tensions définies d'offset (Vref) différentes l'une de l'autre, sont introduites dans des cycles de mesure successifs dans le convertisseur numérique-analogique, et **en ce qu'**une moyenne des différents premiers signaux numériques et des différents seconds signaux numériques est effectuée pour fournir un signal numérique de sortie ($OUT_{DX}$) relatif à la mesure du paramètre physique en ayant réduit l'effet de la non-linéarité du convertisseur numérique-analogique.

3. Procédé selon la revendication 2, **caractérisé en ce que** chaque premier signal numérique et chaque second signal numérique fonction d'une des tensions définies d'offset (Vref) introduites successivement dans le convertisseur numérique-analogique sont mémorisées dans l'unité logique (5).

4. Procédé de mesure selon la revendication 1, pour lequel le convertisseur numérique-analogique (7) comprend encore un amplificateur OTA (17) relié à une entrée négative à une électrode de tous les condensateurs du réseau capacitif (13), un commutateur ($SW_D$) et un condensateur d'intégration (Cfb) en parallèle reliant une sortie de l'amplificateur OTA à l'entrée négative de l'amplificateur dans la boucle d'asservissement, une entrée positive de l'amplificateur OTA recevant une tension définie d'offset pour modifier la tension de mesure ($V_{DAC}$) fournie en sortie de l'amplificateur OTA dans les cycles de mesure, **caractérisé en ce que** l'unité logique (5) comprend un premier registre pour mémoriser le premier signal numérique de mesure sur 10 bits suite à une intégration positive, et un second registre pour mémoriser le second signal numérique de mesure sur 10 bits suite à une intégration négative, et une mémoire pour mémoriser des résultats de la mesure du paramètre physique dans les cycles de mesure.

5. Procédé de mesure selon l'une des revendications précédentes, pour lequel le capteur capacitif est du type triaxial avec trois paires de condensateurs (C1X, C2X, C1Y, C2Y, C1Z, C2Z) montés en différentiel avec une électrode commune (CM) par paire ou pour toutes les paires et deux électrodes fixes pour chaque paire, et l'unité logique (5) du circuit électronique est en mesure de fournir des premier et second signaux numériques de mesure pour chaque axe de mesure X, Y et Z, **caractérisé en ce que** le procédé pour la mesure d'un paramètre physique comprend 12 phases successives par cycle de mesure, qui consistent à répéter successivement pendant les six premières phases, les étapes a) et b) pour chaque axe X, Y, Z avec le premier signal numérique correspondant à l'axe sélectionné, et à répéter successivement pendant les six dernières phases, les étapes c) et d) pour chaque axe X, Y, Z avec le second signal numérique correspondant à l'axe sélectionné.

6. Procédé de mesure selon l'une des revendications 1 à 4, pour lequel le capteur capacitif est du type triaxial avec trois paires de condensateurs (C1X, C2X, C1Y, C2Y, C1Z, C2Z) montés en différentiel avec une électrode commune (CM) par paire ou pour toutes les paires et deux électrodes fixes pour chaque paire, et pour lequel l'unité logique (5) du circuit électronique (1) est en mesure de fournir des premier et second signaux numériques de mesure pour chaque axe de mesure X, Y et Z, **caractérisé en ce que** le procédé de mesure d'un paramètre physique, comprend 12 phases successives par cycle de mesure, qui consistent à effectuer pour l'axe X, les étapes a) à d) avec les premier et second signaux numériques de mesure de l'axe X, à effectuer pour l'axe Y à la suite de l'axe X, les étapes a) à d) avec les premier et second signaux numériques de mesure de l'axe Y et finalement à effectuer pour l'axe Z à la suite de l'axe Y, les étapes a) à d) avec les premier et second signaux numériques de mesure de l'axe Z.

7. Circuit électronique (1) d'interface d'un capteur capacitif, qui comprend une paire de condensateurs (C1X, C2X) montés en différentiels, adapté à la mise en oeuvre du procédé selon l'une des revendications précédentes, le circuit électronique comprenant un amplificateur à transfert de charges (4) connecté à l'électrode commune (CM) par l'intermédiaire d'une unité de commutation (3), une unité logique (5) reliée à la sortie de l'amplificateur pour un traitement numérique de l'information fournie par l'amplificateur et la fourniture de premier et second signaux numériques de mesure dépendant respectivement d'une première polarisation des électrodes fixes des condensateurs et d'une seconde polarisation inverse de la première polarisation, et un convertisseur numérique-analogique (7) susceptible de fournir une tension de mesure ($V_{DAC}$) aux électrodes par l'intermédiaire de l'unité de commutation (3), la tension de mesure étant définie sur la base d'une conversion du mot binaire (DACbus) relatif au premier signal numérique ou au second signal numérique de mesure, **caractérisé en ce que** le convertisseur numérique-analogique (7) du circuit électronique comprend un ensemble électronique (15, 16) susceptible d'introduire une tension définie d'offset (Vref) dans le convertisseur pour modifier ou moduler les premier et second signaux numérique dans l'unité logique (5) afin de réduire l'effet de la non-linéarité du convertisseur pour la mesure d'un paramètre physique, le convertisseur comprenant un réseau capacitif (13) commandé successivement par le mot binaire (DACbus) d'un premier registre et par le mot binaire (DACbus) d'un second registre de l'unité logique (5).

8. Circuit électronique (1) selon la revendication 7, **caractérisé en ce que** le convertisseur numérique-analogique comprend encore un amplificateur OTA (17) relié à une entrée négative à une électrode de tous les condensateurs du réseau capacitif (13), un commutateur (SW$_D$) et un condensateur d'intégration (Cfb) en parallèle reliant une sortie de l'amplificateur OTA à l'entrée négative de l'amplificateur dans la boucle d'asservissement, une entrée positive de l'amplificateur OTA recevant une tension définie d'offset fournie par l'ensemble électronique (16, 15) pour modifier la tension de mesure (V$_{DAC}$) fournie en sortie de l'amplificateur OTA dans les cycles de mesure.

**9.** Circuit électronique (1) selon la revendication 8, **caractérisé en ce que** l'ensemble électronique comprend un diviseur résistif (DR2) connecté entre une tension haute (V$_{REG}$) et une tension basse (Vss) d'une source de tension d'alimentation, un réseau de commutateurs (15) sous la forme d'un multiplexeur analogique connecté en entrée à différents noeuds du diviseur résistif, et fournissant un sortie la tension définie d'offset (Vref) sur la base d'un mot binaire d'ajustage (T_vref).

**10.** Circuit électronique (1) selon l'une des revendications 7 à 9, **caractérisé en ce qu'**il comprend un générateur (6) de tension de référence à gain programmable pour fournir des tensions de référence programmées (V$_{DACinp}$, V$_{DACinn}$) aux commutateurs du réseau capacitif (13) par l'intermédiaire d'une unité de sélection d'intégration positive ou négative (12).

**Patentansprüche**

**1.** Verfahren zum Verringern der Wirkung der Nichtlinearität eines Digital/Analog-Umsetzers auf eine elektronische Schnittstellenschaltung eines kapazitiven Sensors (2) für eine Messung eines physikalischen Parameters, wobei der kapazitive Sensor (2) wenigstens zwei in Differentialanordnung geschaltete Kondensatoren (C1X, C2X) umfasst, wovon eine gemeinsame Elektrode (CM) in Bezug auf jede feste Elektrode der beiden Kondensatoren verlagerbar ist, um den Kapazitätswert jedes Kondensators bei der Messung des physikalischen Parameters zu verändern, wobei die elektronische Schaltung umfasst: einen Ladungsverschiebungs-Verstärker (4), der mit der gemeinsamen Elektrode (CM) über eine Kommutationseinheit (3) verbunden ist, eine Logikeinheit (5), die mit dem Ausgang des Verstärkers für eine digitale Verarbeitung der von dem Verstärker gelieferten Informationen und für die Bereitstellung digitaler Messsignale verbunden ist, und einen Digital/Analog-Umsetzer (7), der eine Messspannung (V$_{DAC}$) über die Kommutationseinheit (3) an die Elektroden liefern kann, wobei die Messspannung anhand einer Umsetzung eines binären Wortes (DACbus) definiert ist, das wenigstens eines der digitalen Messsignale definiert, wobei das Verfahren in jedem aufeinander folgenden Messzyklus die folgenden Schritte umfasst, die darin bestehen:

a) die Elektroden der Kondensatoren (C1X, C2X, CM) über die Kommutationseinheit (3) mit einer Messspannung (VDAC) vorzuspannen, die von dem Digital/Analog-Umsetzer (7) geliefert wird anhand eines ersten digitalen Messsignals, das in wenigstens einem ersten Register der Logikeinheit (5) eines vorhergehenden Zyklus gespeichert ist, oder anhand eines ersten anfänglichen binären Wortes, das von der Logikeinheit (5) geliefert wird, wobei das erste digitale Signal von einer ersten Vorspannung der festen Elektroden der Kondensatoren abhängt,
b) die feste Elektrode des ersten Kondensators (C1X) mit einer regulierten hohen Spannung (V$_{REG}$) einer Versorgungsspannungsquelle der elektronischen Schaltung vorzuspannen und die feste Elektrode des zweiten Kondensators (C2X) mit einer niedrigen Spannung (Vss) der Versorgungsspannungsquelle vorzuspannen, um das erste digitale Messsignal in der Logikeinheit (5) anzupassen,
c) die Elektroden der Kondensatoren (C1X, C2X, CM) über die Kommutationseinheit (3) mit einer Messspannung (VDAC) vorzuspannen, die von dem Digital/Analog-Umsetzer geliefert wird anhand eines zweiten digitalen Messsignals, das in wenigstens einem zweiten Register der Logikeinheit (5) eines vorhergehenden Zyklus gespeichert ist, oder anhand eines zweiten anfänglichen binären Worts, das von der Logikeinheit (5) geliefert wird, wobei das zweite digitale Signal von einer zweiten Vorspannung, die zu der ersten Vorspannung der festen Elektroden der Kondensatoren invers ist, abhängt, und
d) die feste Elektrode des ersten Kondensators (C1X) auf eine niedrige Spannung (Vss) der Versorgungsspannungsquelle der elektronischen Schaltung vorzuspannen und die feste Elektrode des zweiten Kondensators (C2X) auf eine regulierte hohe Spannung (V$_{REG}$) der Versorgungsspannungsquelle vorzuspannen, um das zweite digitale Messsignal in der Logikeinheit (5) anzupassen,

**dadurch gekennzeichnet, dass** am Anfang oder während der Messzyklen des physikalischen Parameters eine definierte Offsetspannung (Vref) einer elektronischen Anordnung (15, 16) des Digital/Analog-Umsetzers (7) an den Digital/Analog-Umsetzer angelegt wird, um das erste und das zweite digitale Signal zu verändern oder anzupassen, dass ein Mittelwert einer Kurve einer positiven Integration und einer Kurve einer negativen Integration mit den digitalen Werten, die in dem ersten und dem zweiten Register der Logikeinheit (5) gespeichert sind, gebildet wird und dass ein Mittelwert des ersten und des zweiten digitalen Signals gebildet wird, um ein digitales Ausgangssignal (OUT$_{DX}$) zu liefern, das auf die Messung des physikalischen Parameters bezogen ist und in dem die Wirkung der Nichtlinearität des Digital/Analog-Umsetzers, der ein kapazitives Netzwerk (13) umfasst, das nacheinander durch das binäre Wort (DACbus) des ersten Registers und durch das binäre Wort (DACbus) des zweiten Registers gesteuert wird, verringert ist.

2. Verfahren nach Anspruch 1, **dadurch gekennzeichnet, dass** mehrere voneinander verschiedene definierte Offsetspannungen (Vref) in den aufeinander folgenden Messzyklen an den Digital/Analog-Umsetzer angelegt werden und dass ein Mittelwert der verschiedenen ersten digitalen Signale und der verschiedenen zweiten digitalen Signale gebildet wird, um ein digitales Ausgangssignal (OUT$_{DX}$), das auf die Messung des physikalischen Parameters bezogen ist und bei dem die Wirkung der Nichtlinearität des Digital/Analog-Umsetzers verringert ist, zu liefern.

3. Verfahren nach Anspruch 2, **dadurch gekennzeichnet, dass** jedes erste digitale Signal und jedes zweite digitale Signal, die von einer der nacheinander an den Digital/Analog-Umsetzer angelegten definierten Offsetspannungen (Vref) abhängen, in der Logikeinheit (5) gespeichert werden.

4. Messverfahren nach Anspruch 1, wobei der Digital/Analog-Umsetzer (7) außerdem einen Verstärker OTA (17), der mit einem negativen Eingang mit einer Elektrode sämtlicher Kondensatoren des kapazitiven Netzwerks (13) verbunden ist, einen Kommutator (SW$_D$) und einen Integrationskondensator (Cfb) umfasst, die einen Ausgang des Verstärkers OTA parallel mit dem negativen Eingang des Verstärkers in der Regelungsschleife verbinden, wobei ein positiver Eingang des Verstärkers OTA eine definierte Offsetspannung empfängt, um die Messspannung (V$_{DAC}$) zu verändern, die am Ausgang des Verstärkers OTA in den Messzyklen geliefert wird, **dadurch gekennzeichnet, dass** die Logikeinheit (5) ein erstes Register zum Speichern des ersten digitalen Messsignals mit 10 Bits nach einer positiven Integration und ein zweites Register zum Speichern des zweiten digitalen Messsignals mit 10 Bits nach einer negativen Integration und einen Speicher zum Speichern der Ergebnisse der Messung des physikalischen Parameters in den Messzyklen umfasst.

5. Messverfahren nach einem der vorhergehenden Ansprüche, wobei der kapazitive Kondensator vom dreiachsigen Typ ist mit drei Paaren von Kondensatoren (C1X, C2X, C1Y, C2Y, C1Z, C2Z), die in Differentialanordnung geschaltet sind und eine gemeinsame Elektrode (CM) pro Paar oder für alle Paare und zwei feste Elektroden für jedes Paar besitzen, und die Logikeinheit (5) der elektronischen Schaltung in der Lage ist, erste und zweite digitale Messsignale für jede Messachse X, Y und Z zu liefern, **dadurch gekennzeichnet, dass** das Verfahren zum Messen eines physikalischen Parameters 12 aufeinander folgende Phasen pro Messzyklus umfasst, die darin bestehen, nacheinander während der sechs ersten Phasen die Schritte a) und b) für jede Achse X, Y, Z mit dem ersten digitalen Signal, das der ausgewählten Achse entspricht, zu wiederholen und nacheinander während der sechs letzten Phasen die Schritte c) und d) für jede Achse X, Y, Z mit dem zweiten digitalen Signal, das der ausgewählten Achse entspricht, zu wiederholen.

6. Messverfahren nach einem der Ansprüche 1 bis 4, wobei der kapazitive Kondensator vom dreiachsigen Typ ist mit drei Paaren von Kondensatoren (C1X, C2X, C1Y, C2Y, C1Z, C2Z), die in Differentialanordnung geschaltet sind und eine gemeinsame Elektrode (CM) pro Paar oder für alle Paare und zwei feste Elektroden für jedes Paar besitzen, und wobei die Logikeinheit (5) der elektronischen Schaltung (1) in der Lage ist, erste und zweite digitale Messsignale für jede Messachse X, Y und Z zu liefern, **dadurch gekennzeichnet, dass** das Verfahren zum Messen eines physikalischen Parameters 12 aufeinander folgende Phasen pro Messzyklus umfasst, die darin bestehen, für die Achse X die Schritte a) bis d) mit den ersten und zweiten digitalen Messsignalen der Achse X auszuführen, für die Achse Y nach der Achse X die Schritte a) bis d) mit den ersten und zweiten Messsignalen der Achse Y auszuführen und schließlich für die Achse Z nach der Achse Y die Schritte a) bis d) mit den ersten und zweiten digitalen Messsignalen der Achse Z auszuführen.

7. Elektronische Schnittstellenschaltung eines kapazitiven Sensors, die ein Paar in Differentialanordnung geschalteter Kondensatoren (C1X, C2X) umfasst, die dafür ausgelegt ist, das Verfahren nach einem der vorhergehenden Ansprüche auszuführen, wobei die elektronische Schaltung einen Verstärker (4) mit Ladungsübertragung (5), der mit der gemeinsamen Elektrode (CM) über eine Kommutationseinheit (3) verbunden ist, eine Logikeinheit (5), die mit dem Ausgang des Verstärkers für eine digitale Verarbeitung der von dem Verstärker gelieferten Informationen und für die Lieferung eines ersten und eines zweiten digitalen Messsignals, die von einer ersten Vorspannung der festen Elektroden der Kondensatoren und einer zu der ersten Vorspannung inversen zweiten Vorspannung abhängen, verbunden ist, und einen Digital/Analog-Umsetzer (7), der eine Messspannung (V$_{DAC}$) an die Elektroden über die Kommutationseinheit (3) liefern kann, umfasst, wobei die Messspannung anhand einer Umsetzung des binären Wortes (DACbus), das auf das erste digitale Messsignal oder das zweite digitale Messsignal bezogen ist, definiert ist, **dadurch gekennzeichnet, dass** der Digital/Analog-Umsetzer (7) der elektronischen Schaltung eine elektronische Anordnung (15, 16) umfasst, die an den Umsetzer eine definierte Offsetspannung (Vref) anlegen kann, um die ersten und zweiten digitalen Signale in der Logikeinheit (5) zu verändern oder anzupassen, um die Wirkung der Nichtlinearität des Umsetzers auf die Messung eines physikalischen Parameters zu verringern, wobei der Umsetzer ein kapazitives Netzwerk (13) umfasst, das nacheinander durch das binäre Wort (DACbus) eines ersten Registers und durch das binäre Wort (DACbus) eines zweiten Registers der Logikeinheit (5) gesteuert wird.

8. Elektronische Schaltung (1) nach Anspruch 7, **dadurch gekennzeichnet, dass** der Digital/Analog-Umsetzer außerdem einen Verstärker OTA (17), der mit einem negativen Eingang mit einer Elektrode sämtlicher Kondensatoren des kapazitiven Messwerks (13) verbunden ist, einen Kommutator ($SW_D$) und einen Integrationskondensator (Cfb) umfasst, die parallel einen Ausgang des Verstärkers OTA mit dem negativen Eingang des Verstärkers in der Regelungsschleife verbinden, wobei ein positiver Eingang des Verstärkers OTA eine definierte Offsetspannung empfängt, die von der elektronischen Anordnung (16, 15) geliefert wird, um die Messspannung ($V_{DAC}$), die am Ausgang des Verstärkers OTA in den Messzyklen geliefert wird, zu verändern.

9. Elektronische Schaltung (1) nach Anspruch 8, **dadurch gekennzeichnet, dass** die elektronische Anordnung einen Widerstandsteiler (DR2), der mit einer hohen Spannung ($V_{REG}$) und mit einer niedrigen Spannung (Vss) einer Versorgungsspannungsquelle verbunden ist, und ein Kommutatornetzwerk (15) in Form eines analogen Multiplexers, der an seinem Eingang mit verschiedenen Knoten des Widerstandsteilers verbunden ist und am Ausgang die definierte Offsetspannung (Vref) anhand eines binären Einstellworts (T_vref) liefert, umfasst.

10. Elektronische Schaltung (1) nach einem der Ansprüche 7 bis 9, **dadurch gekennzeichnet, dass** sie einen Referenzspannungsgenerator (6) mit programmierbarer Verstärkung umfasst, um programmierte Referenzspannungen ($V_{DACinp}$, $V_{DACinn}$) an Kommutatoren des kapazitiven Netzwerks (13) über eine Auswahleinheit für positive oder negative Integration (12) zu liefern.

**Claims**

1. Method for reducing the non-linearity effect of a digital-analogue converter on an electronic interface circuit (1) of a capacitive sensor (2) for measuring a physical parameter, said capacitive sensor (2) including at least two differential connected capacitors (C1X, C2X) whose common electrode (CM) is capable of moving relative to each fixed electrode of the two capacitors to alter the capacitive value of each capacitor when the physical parameter is being measured, said electronic circuit including a charge transfer amplifier (4) connected to the common electrode (CM) via a switching unit (3), a logic unit (5) connected to the amplifier output for digital processing of the data supplied by the amplifier and for supplying digital measuring signals, and a digital-analogue converter (7) capable of supplying a measuring voltage ($V_{DAC}$) to the electrodes via the switching unit (3), the measuring voltage being defined on the basis of a binary word (DACbus) conversion defining at least one of the digital measuring signals, the method including, in each successive measuring cycle, steps consisting in:

   a) biasing the electrodes of the capacitors (C1X, C2X, CM) via the switching unit (3) with a measuring voltage ($V_{DAC}$) supplied by the digital-analogue converter (7) on the basis of a first digital measuring signal stored in at least a first register of the logic unit (5), from a preceding cycle or a first initial binary word supplied by the logic unit (5), the first digital signal depending on a first biasing of the fixed electrodes of the capacitors,
   b) biasing the fixed electrode of the first capacitor (C1X) at a regulated high voltage ($V_{REG}$) from a voltage source of the electronic circuit, and biasing the fixed electrode of the second capacitor (C2X) at a low voltage (Vss) from the voltage source, in order to adapt the first digital measuring signal in the logic unit (5),
   c) biasing the electrodes of the capacitors (C1X, C2X, CM) via the switching unit (3) with a measuring voltage ($V_{DAC}$) supplied by the digital-analogue converter (7) on the basis of a second digital measuring signal stored in at least a second register of the logic unit (5), from a preceding cycle or a second initial binary word supplied by the logic unit (5), the second digital signal depending on a second biasing which is the reverse of the first biasing of the fixed electrodes of the capacitors, and
   d) biasing the fixed electrode of the first capacitor (C1X) at a low voltage (Vss) from the electronic circuit voltage source, and biasing the fixed electrode of the second capacitor (C2X) at a regulated high voltage ($V_{REG}$) from the voltage source, in order to adapt the second digital measuring signal in the logic unit (5),

   **characterized in that** initially, or during the physical parameter measuring cycles, a defined offset voltage (Vref) of an electronic assembly (15, 16) of the digital-analogue converter (7) is introduced into the digital-analogue converter to modify or modulate the first and second digital signals, **in that** a mean of a positive integration curve and of a negative integration curve is performed with digital values stored in the first and second registers of the logic unit (5), and **in that** a mean of the first and second digital signals is taken so as to supply a digital output signal ($OUT_{DX}$) relating to the physical parameter measurement with a reduction in the non-linearity effect of the digital-analogue converter, which includes a capacitor array (13) controlled in succession by the binary word (DACbus) of the first register and by the binary word (DACbus) of the second register.

2. Measuring method according to claim 1, **characterized in that** several defined offset voltages (Vref) that are different from each other are introduced in successive measuring cycles in the digital-analogue converter, and **in that** a mean is taken of the various first digital signals and the various second digital signals, in order to supply a digital output signal ($OUT_{DX}$) relating to the physical parameter measurement with a reduction in the non-linearity effect of the digital-analogue converter.

3. Measuring method according to claim 2, **characterized in that** each first digital signal and each second digital signal, based on one of the defined offset voltages (Vref) introduced in succession into the digital-analogue converter, are stored in the logic unit (5).

4. Measuring method according to claim 1, wherein the digital-analogue converter (7) further includes an OTA amplifier (17) connected at a negative input to one electrode of all the capacitors of the capacitor array (13), a switch ($SW_D$) and an integration capacitor (Cfb) in parallel connecting one output of the OTA amplifier to the negative input of the amplifier in the control loop, a positive input of the OTA amplifier receiving a defined offset voltage to modify the measuring voltage ($V_{DAC}$) supplied at the output of the OTA amplifier in the measuring cycles, **characterized in that** the logic unit (5) includes the first register for storing the first 10-bit-digital measuring signal following positive integration, and the second register for storing the second 10-bit digital measuring signal following negative integration, and a memory for storing the results of the physical parameter measurement in the measuring cycles.

5. Measuring method according to any of the preceding claims, wherein the capacitive sensor is of the tri-axis type with three pairs of differential connected capacitors (C1X, C2X, C1Y, C2Y, C1Z, C2Z) with one common electrode (CM) per pair or for all the pairs and two fixed electrodes for each pair, and wherein the logic unit (5) of the electronic circuit is capable of supplying first and second digital measuring signals for each measuring axis X, Y and Z, **characterized in that** the method for measuring a physical parameter includes 12 successive phases per measuring cycle, which consist in repeating steps a) and b) in succession during the first six phases for each axis X, Y, Z with the first digital signal corresponding to the selected axis, and in repeating steps c) and d) in succession during the last six phases for each axis X, Y, Z with the second digital signal corresponding to the selected axis.

6. Measuring method according to any of claims 1 to 4, wherein the capacitive sensor is of the tri-axis type with three pairs of differential connected capacitors (C1X, C2X, C1Y, C2Y, C1Z, C2Z) with one common electrode (CM) per pair or for all the pairs and two fixed electrodes for each pair, and wherein the logic unit (5) of the electronic circuit (1) is capable of supplying first and second digital measuring signals for each measuring axis X, Y and Z, **characterized in that** the method for measuring a physical parameter includes 12 successive phases per measuring cycle, which consist in performing steps a) to d) for the X axis with the first and second digital measuring signals of the X axis, in performing steps a) to d) for the Y axis after the X axis with the first and second digital measuring signals of the Y axis, and finally in performing steps a) to d) for the Z axis, after the Y axis, with the first and second digital measuring signals of the Z axis.

7. Electronic interface circuit (1) for a capacitive sensor, which includes a pair of differential connected capacitors (C1X, C2X) arranged for implementing the method according to any of the preceding claims, the electronic circuit including a charge transfer amplifier (4) connected to the common electrode (CM) via a switching unit (3), a logic unit (5) connected to the amplifier output for digital processing of the data supplied by the amplifier and for supplying first and second digital measuring signals, dependent respectively on a first biasing of the fixed electrodes of the capacitors and a second biasing which is the reverse of the first biasing, and a digital-analogue converter (7) capable of supplying a measuring voltage ($V_{DAC}$) to the electrodes via the switching unit (3), the measuring voltage being defined on the basis of a binary word (DACbus) conversion relating to the first digital measuring signal or the second digital measuring signal, **characterized in that** the digital-analogue converter (7) of the electronic circuit includes an electronic assembly (15, 16) capable of introducing a defined offset voltage (Vref) into the converter to modify or modulate the first and second digital signals in the logic unit (5) so as to reduce the non-linearity effect of the converter for the measurement of a physical parameter, the digital-analogue converter including a capacitor array (13) controlled in succession by the binary word (DACbus) of a first register and by the binary word (DACbus) of a second register of the logic unit (5).

8. Electronic circuit (1) according to claim 7, **characterized in that** the digital-analogue converter further includes an OTA amplifier (17) connected at a negative input to one electrode of all the capacitors of the capacitor array, a switch ($SW_D$) and an integration capacitor (Cfb) in parallel connecting one output of the OTA amplifier to the negative input of the amplifier in the control loop, a positive input of the OTA amplifier receiving a defined offset voltage supplied by the electronic assembly (16, 15) to modify the measuring voltage ($V_{DAC}$) supplied at the output of the OTA amplifier in the measuring cycles.

9. Electronic circuit (1) according to claim 8, **characterized in that** the electronic assembly includes a resistive divider (DR2) connected between a high voltage ($V_{REG}$) and a low voltage (Vss) from a voltage source, a switch array (15) in the form of an analogue multiplexer connected at entry to different nodes of the resistive divider, and supplying at output the defined offset voltage (Vref) on the basis of a binary adjustment word (T_vref).

10. Electronic circuit (1) according to any of claims 7 to 9, **characterized in that** it includes a reference voltage generator (6) with a programmable gain for supplying programmed reference voltages ($V_{DACinp}$, $V_{DACinn}$) to the switches of the capacitor array (13) via a positive or negative integration selection unit (12).

Fig. 1

EP 2 541 213 B1

Fig. 2

EP 2 541 213 B1

# Fig. 3

EP 2 541 213 B1

**EP 2 541 213 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 1835263 A
- WO 2004113930 A
- WO 2008107737 A
- US 20110154906 A1
- US 20090121769 A1

**Littérature non-brevet citée dans la description**

- **MM. H. LEUTHOLD ; F. RUDOLPH.** *Sensors and actuators,* 1990, vol. A21-A23, 278-281
- A 1 mV MOS Comparator. *IEEE J. Solid-State Circuits,* Juin 1978, vol. SC-13, 294-298